Europäisches Patentamt

European Patent Office

Office européen des brevets

(19)

(11) Publication number: **0 194 770 B1**

(12) # EUROPEAN PATENT SPECIFICATION

(45) Date of publication of patent specification: **17.07.91**  (51) Int. Cl.⁵: **A01N 25/24**

(21) Application number: **86301236.5**

(22) Date of filing: **21.02.86**

(54) **Disinfectant polymeric coatings for hard surfaces.**

(30) Priority: **13.03.85 US 711189**

(43) Date of publication of application:
**17.09.86 Bulletin 86/38**

(45) Publication of the grant of the patent:
**17.07.91 Bulletin 91/29**

(84) Designated Contracting States:
**AT BE CH DE FR GB IT LI LU NL SE**

(56) References cited:
**DE-B- 2 916 304**
**FR-A- 2 342 074**
**US-A- 3 966 902**

**CHEMICAL ABSTRACTS, vol. 74, no. 24, 14th
June 1971, page 142, abstract no. 128013b,
Columbus, Ohio, US;**

(73) Proprietor: **ECOLAB INC.**
**Ecolab Center**
**Saint Paul Minnesota 55102(US)**

(72) Inventor: **Flesher, Daniel J.**
**1735 Scheffer Avenue**
**St. Paul Minnesota 55116(US)**
Inventor: **Hall, Robert T.**
**20175 Rhoda Avenue**
**Welch Minnesota 55089(US)**
Inventor: **Chromecek, Richard C.**
**RFD No. 1**
**Litchfield Connecticut 06759(US)**
Inventor: **Braun, Michael C.**
**4 Hill Street**
**Port Jervis New York 12771(US)**

(74) Representative: **Bond, Bentley George et al
Haseltine Lake & Co. 28 Southampton Build-
ings Chancery Lane
London WC2A 1AT(GB)**

## Description

The invention relates to liquid compositions that can form adherent, transparent, abrasion resistant polymeric films having prolonged antimicrobial properties.

Recent studies have indicated that the contamination of both wet and dry household surfaces with potentially pathogenic quantities of bacteria is widespread. Following a study of bacterial flora in 200 homes, Scott et al., in J. Hyg. Camb., Vol. 89, 279 (1982) concluded that improved decontamination procedures are necessary, particularly at sites which are repeatedly wetted, such as the surfaces of sinks, toilets, draining boards, stoves, washing machines and the like. However, controlled in use tests employing dilute aqueous detergents at kitchen and bathroom sites achieved no observable reduction in microbial contamination, while application of aqueous hypochlorite and phenolic disinfectant compositions only produced a significant reduction in contamination levels for 3-6 hours. In their evaluation of disinfectants in the domestic environment, Scott et al., J. Hyg. Camb., Vol. 92, 193 (1984) hypothesized that the rapid recontamination was due both to re-usage of surfaces such as toilets and to the local multiplication of residual colonies at repeatedly wetted sites such as sinks.

Compositions intended for the controlled release of a disinfectant from a film of a stabilized hydrophilic polymer are disclosed in U.S Pat. No. 3,966,902. The polymer complex is stabilized as a metal complex by the addition of an inorganic aluminum, zirconium or zinc salt such as aluminum chlorohydrol to the polymerization mixture. The stabilization adjuvant is necessary due to the fact that upon contact with water, films of simple hydrogels become highly swollen and rapidly elute their additives. Furthermore, dry films both simple and metal-complexed hydrogels do not adhere well to ceramic and other hard surfaces and lose their adhesion completely when wetted.

Thus, a need exists for a disinfectant composition capable of forming a polymeric film on hard surfaces such as those formed of ceramics, glass, formica, plastics, metals and the like, which film can entrain a germicidal substance such as a quaternary ammonium salt or a phenolic. A need also exists for a composition capable of yielding a transparent film having strong adhesion to the substrate surface and high resistance against abrasive removal during commonly-employed cleansing procedures. A further need exists for a disinfectant film capable of providing extended protection against microbial contamination.

## Brief Description of the Invention

The present invention provides liquid disinfectant compositions which yield adherent, water-resistant, polymeric films when coated onto porous or non-porous hard surfaces and dried. The liquid compositions comprise germicidal agents which are effective to destroy pre-existing microbial colonies and which impart prolonged antimicrobial properties to the deposited films.

The liquid disinfectant compositions will comprise a film-forming copolymer of (a) a monomer having a hydrophilic group and (b) an alpha, beta-unsaturated carboxylic acid ester selected from the group consisting of "aromatic esters", cycloalkyl esters and mixtures thereof. The copolymer will comprise about 20-99.5 mol-% of the hydrophilic monomer, and about 0.5-80 mol-% of the cycloalkyl or "aromatic ester" monomer, which can optionally be replaced with about 1-90% of an alkyl or alkoxy(alkyl) ester of an alpha, beta-unsaturated acid. The copolymers are substantially free of inorganic metal salt complexation agents such as those disclosed in U.S. Pat. No. 3,966,902. These copolymers can be viewed as modified hydrogels which are surprisingly capable of forming films which are adherent to hard surfaces and are resistant to removal when exposed to water and mild abrasion. The films can be readily deposited from dilute solutions or dispersions of the copolymer in volatile solvent systems. These liquid systems will also incorporate germicidal agents such as phenols or a quaternary ammonium salt. The agents are entrapped in the dried polymeric films, and can be incrementally released when the coated surface is contacted with moisture. Contact with atmospheric humidity can assist in maintaining treated surfaces in a substantially microbe-free condition, while exposure to larger amounts of water, as when the surface is moistened by wiping, food residues, dishwater and the like, can lead to the release of increased amounts of the germicide. The polymeric films remain clear and non-tacky, and thus do not detract from the appearance of the surfaces to which they are applied.

Although not wishing to be bound by any theory of action, it is believed that the desirable properties of the present composition is due to the balance of hydrophilic and hydrophobic properties of the copolymer. The hydrophilicity of the resultant films may assist both the retention of the germicide and its exposure and activation by externally-applied water. The hydrophobicity imparted to the films by the aromatic and/or the cycloalkyl ester comonomer apparently imparts the necessary adherence and abrasion-resistance to the dried films.

As used herein with respect to antimicrobial action or to the release of a germicide from the present films, the term "prolonged" is intended to refer to the retention of substantial antimicrobial action as determined by laboratory test methods after at least 2 and most preferably after at least 5-10 water washes.

As used herein with respect to the solvents used as carriers for the active ingredients of the present compositions, the term "volatile" is intended to define solvents or solvent systems which readily evaporate when applied to hard surfaces in thin films at ambient conditions e.g. at about 15-35° C.

As used herein with respect to the surfaces treated by the present compositions, the term "hard" is intended to refer to surfaces composed of refractory materials such as glazed and unglazed tile, brick, porcelain, ceramics, metals, glass and the like, and also includes hard plastics such as formica, polystyrenes, vinyls, acrylics, polyesters, and the like.

Percentages of materials are weight percentages (wt-%) unless otherwise indicated.

Detailed Description of the Invention

The liquid disinfectant composition of the present invention comprises a solution of a minor amount of a film-forming copolymer comprising 20-99,5 mol-% of (a) a monomer having a hydrophilic functional group, and (b) about 0.5-80 mol-% of said copolymer of an alpha, beta-unsaturated carboxylic acid ester selected from the group consisting of "aromatic esters", cycloalkyl esters, and mixtures thereof. The copolymer is dissolved in a major amount of a volatile solvent which also incorporates an amount of a germicidal agent effective to impart prolonged antimicrobial properties to the films formed upon removal of the solvent from coatings of said compositions. Copolymer monomer (b) preferably comprises a combination of a cycloalkyl ester or an "aromatic ester" of an alpha, beta-unsaturated acid in combination with about 1-90 mol-% of the cycloalkyl or aromatic ester of an alkyl ester or an (alkoxy)alkyl ester of an alpha, beta-unsaturated acid.

The Hydrophilic Monomer

Hydrophilic monomer materials which may be utilized in accord with the present invention are preferably esters of alpha, beta-unsaturated carboxylic acids such as methacrylic acid, acrylic acid, itaconic acid, aconitic acid, cinnamic acid, crotonic acid, mesaconic acid, carboxyethyl acrylic acid, maleic acid, or fumaric acid. For example, preferred hydroxylalkyl esters include the esters of these acids and ethylene glycol, di-, tri-, tetra- and (poly)ethylene glycols, propylene glycol and dipropylene glycol; 1,3- or 1,4-butylene glycol or 1,6 hexamethylene glycol. The preferred unsaturated carboxylic acids include $C_3-C_{10}$-carboxylic acids, i.e., acrylic acid, methacrylic acid, and itaconic acid.

Suitable hydrophilic monomers include the following: diethylaminoethyl acrylate or methacrylate, dimethylaminoethyl acrylate or methacrylate, monoethylaminoethyl acrylate or methacrylate, tert-butylaminoethyl methacrylate, piperidinoethyl methacrylate, morpholinoethyl methacrylate, dimethylaminopropyl acrylate and methacrylate, 2-pyrrolidinoethyl methacrylate, 3-dimethylaminoethyl-2-hydroxy-propyl acrylate or methacrylate, 2-aminoethyl acrylate or methacrylate, N-methyl acrylamide or methacrylamide, 2-hydroxyethyl acrylamide or methacrylamide, isopropyl-, t-butyl- and t-octylacrylamide or methacrylamide or diacetone acrylamide.

The film-forming copolymers of the present invention incorporate about 20-99.5 mol-% of the hydrophilic monomer component, preferably about 50-95 mol-%.

The Comonomer Modifier

In accord with the present invention, the copolymerization of the hydrophilic monomer with at least one alpha, beta-unsaturated carboxylic acid ester selected from the group consisting of cycloalkyl esters, aromatic esters, and mixtures thereof, substantially improves the adhesion of the copolymer films to hard surfaces. Preferably, the copolymer will include about 0.5-80 mol-% of at least one of these modifying comonomers, most preferably about 1-50 mol-%.

As used herein, the term "cycloalkyl ester" includes bi- and tricycloalkyl esters, and the term "aromatic ester" includes hetero-aromatic esters and tetrahydrofurfur. Especially preferred cycloalkyl and aromatic esters are those of acrylic acid, methacrylic acid or itaconic acid. Useful aromatic esters of these acids include phenyl, benzyl, and phenoxyethyl esters. Useful cycloalkyl esters include $C_5-C_{12}$ cycloalkyls, e.g. the cyclohexyl, isobornyl and adamantyl esters of these acids.

Alkyl and alkoxy(alkyl) esters of alpha, beta-unsaturated carboxylic acids can be used in combination with the "aromatic" and/or cycloalkyl ester. Preferably the alkyl esters will be selected from higher(alkyl) esters, such as those of about 5-22 carbon atoms, most preferably about 5-12 carbon atoms. The alkyl and

3

alkoxy (alkyl) esters can be employed to the extent of about 1-90 mol-% by weight of the total of the modifying comonomer. Preferably the mol-% ratio of cycloalkyl or aromatic ester to alkyl ester is about 2:1-1:2.

The alkyl and (alkoxy)alkyl esters of acrylic acid, methacrylic acid and itaconic acid are preferred for use in the present comonomer mixtures.

Examples of these fatty-alkyl ester comonomers which can be employed in combination with cycloalkyl and/or aromatic ester monomers include myristyl, palmityl and stearyl acrylates, methacrylates and itaconates.

Examples of useful $C_5$-$C_{12}$ compounds include hexyl, octyl, ethyl(hexyl), isodecyl and lauryl, acrylates, methacrylates and itaconates. Alkyl esters having branched, as opposed to straight chain moieties are also preferred for use in the present copolymers.

(Alkoxy)alkyl esters useful as comonomers include ($C_1$-$C_4$)alkoxy($C_1$-$C_4$-alkyl) esters of acrylic, methacrylic or itaconic acid such as (methoxy)ethyl, (ethoxy)ethyl, (methoxy)propyl or (ethoxy)propyl.

## The Polymerization Reaction

The film-forming copolymers can be prepared by carrying out the polymerization of the monomers in a solvent or solvent mixture and at concentrations wherein the resultant copolymers remain in solution. Preferred solvents include lower alkanols such as ethanol; ketones, glycol esters or ethers, lower(alkyl)-acetates; tetrahydrofuran or dimethylformamide. The monomeric starting materials are typically dissolved in the solvent to the desired concentration, e.g. to a total concentration about 15-30% by weight, although higher or lower concentrations may be employed in some cases.

The polymerization reactions are initiated in the conventional manner and preferably by use of radical-forming initiators. Instances of suitable initiators include dibenzoyl peroxide, tert-butyl peroctoate, cumene hydroperoxide, diazodiisobutyrodinitrile, diisopropylpercarbonate or ammonium persulfate, per se or in combination with a reducing agent, i.e., in the form of an oxidation-reduction system.

During the course of the reaction, the reaction mixture may be agitated and heated, preferably in a closed system under an inert atmosphere, to about 50-100°C, preferably to about 75-95°C. After completion of the polymerization reaction, a solution of copolymer results, which can be employed without further purification or concentration in the present disinfectant compositions.

## The Germicidal Agent

The liquid compositions will incorporate an amount of one or more germicidal agents effective to both disinfect surfaces upon contact and to impart prolonged antimicrobial action to the polymeric films prepared therefrom. A wide variety of antimicrobial agents may be included in effective amounts without inducing undesirable interactions or chemical reactions between the major components of the compositions. Such agents can include chlorhexidine, chlorhexidine gluconate, glutaral, halazone, hexachlorophene, nitrofurazone, nitromersol, povidone-iodine, thimerosol, $C_1$-$C_5$-parabens, hypochlorite salts, clofucarban, clorophene, poloxamer-iodine, phenolics, mafenide acetate, aminacrine hydrochloride, quaternary ammonium salts, oxychlorosene, metabromsalan, merbromin, dibromsalan, glyceryl laurate, sodium and/or zinc pyrithione, (dodecyl) (diethylenediamine)glycine and/or (dodecyl)(aminopropyl) glycine.

Phenolic compounds are among the preferred germicides for use in the present compositions. Useful phenolic germicides include phenol, m-cresol, o-cresol, p-cresol, o-phenyl-phenol, 4-chloro-m-cresol, chloroxylenol, 6-n-amyl-m-cresol, resorcinol, resorcinol monoacetate, p-tert-butyl-phenol and o-benzyl-p-chlorophenol. The biologically-active, water soluble salts of these compounds may also be employed, e.g., the alkali metal salts. Of these compounds o-benzyl-p-chlorophenol is preferred due to its high germidical power.

Quaternary ammonium salts are also preferred germicides for use in the present invention and include the N-(higher) $C_{14}$-$C_{24}$-alkyl-N-benzyl-quaternary ammonium salts which comprise water solubilizing anions such as halide, e.g., chloride, bromide and iodide; sulfate, methosulfate and the like and the heterocyclic imides such as the imidazolinium salts.

For convenience, the aliphatiac quaternary ammonium salts may be structurally defined as follows:

$(R)(R_1)(R_2)(R_3)N^+X^-$

wherein R is benzyl, or lower(alkyl) benzyl; $R_1$ is alkyl of 10 to 24, preferably 12 to 22 carbon atoms; $R_2$ is $C_{10}$-$C_{24}$-alkyl, $C_1$-$C_4$-alkyl or $C_1$-$C_4$-hydroxyalkyl, $R_3$ is lower alkyl or hydroxyalkyl of 1 to 4 carbon atoms

4

and X represents an anion capable of imparting water solubility or dispersibility including the aforementioned chloride, bromide, iodide, sulfate and methosulfate. Particularly preferred species of these aliphatiac quats include n-$C_{12}$-$C_{18}$-alkyl-dimethylbenzylammonium chloride (myrisalkonium chloride), n-$C_{12}$-$C_{24}$-alkyl-dimethyl (ethylbenzyl) ammonium chloride (quaternium 14), dimethyl(benzyl)ammonium chloride and mixtures thereof. These compounds are commercially available as the BTC series from Onyx Chemical Co., Jersey City, NJ. For example, BTC 2125M is a mixture of myrisalkonium chloride and quaternium-14

Other useful aliphatic quaternary ammonium compounds include the N,N-di-(higher)-$C_{10}$-$C_{24}$-alkyl-N,N-di(lower)-$C_1$ -$C_4$-alkyl-quaternary ammonium salts such as distearyl(dimethyl)ammonium chloride, cetyl-(dimethyl)ethyl ammonium bromide, dicoco(dimethyl)ammonium chloride, dihydrogenated tallow(dimethyl)-ammonium chloride, di-tallow-(dimethyl)ammonium chloride, distearyl(dimethyl) ammonium methosulfate cetyl(trimethyl)ammonium bromide and di-hydrogenated-tallow(dimethyl)ammonium methosulfate.

Other useful nitrogenous germicides include benzethonium chloride, cetylpyridinium chloride, methyl-benzethonium chloride, domiphen bromide or gentian violet.

The total concentration of the germicidal component of the present liquid compositions can vary widely, depending upon its antimicrobial activity, solubility or stability. Although high weight ratios of germicide to copolymer, e.g. 2-3:1, can afford satisfactory disinfectant films, generally the concentration of the germicide will not exceed the concentration of the dissolved copolymer. For example, the present disinfectant compositions will preferably comprise about 0.01-10%, most preferably about 0.05-5% by weight of the phenolic or quaternary ammonium salts. Highly durable, abrasion resistant films can be achieved when the total concentration of the germicidal agent in the present compositions comprises about 0.01-50%, preferably about 0.25-20%, and most preferably about 0.5-5% by weight of the dissolved copolymer.

Preparation and Application of the Compositions

The present film-forming liquid compositions are readily prepared by dissolving the germicidal agent in a solution of the copolymer with agitation under ambient conditions, followed by dilution of the resultant solution to the appropriate concentration by addition of the volatile carrier solvent or solvent system. Since the copolymer is commonly prepared in a volatile solvent such as a lower(alkanol) or a lower(alkyl)acetate, this solution can be diluted with a compatible organic solvent. As the organic solvent there can be employed alcohols, particularly lower aliphatic saturated alcohols, e.g. ethyl alcohol, isopropyl alcohol, propyl alcohol, glycols, e.g. ethylene glycol diethylene glycol, propylene glycol and dipropylene glycol, ethylene glycol methyl ether, ethylene glycol ethyl ether, n-propylene glycol monomethyl ether, n-propylene glycol monoethyl ether, isopropylene glycol monomethyl ether, isopropylene glycol monoethyl ether, m-pyrol and ethyl acetate. Mixtures of these solvents with amounts of water can also be used, provided that the homogeneous solutions of the copolymer and the germicide are maintained. For example solutions formed by dissolving the germicide in ethanolic solutions of the comonomer can be diluted with a compatible volatile solvent or solvent system such as isopropanol (isopropyl alcohol) or isopropanol-water. Useful compositions of this type can comprise at least about 85% of a mixture of isopropanol and water.

Therefore, the preferred liquid disinfectant compositions of the present invention will comprise about 0.25-10%, preferably about 0.5-5% of the film-forming copolymer; about 0.10-10%, preferably about 0.05-5% of the germicidal agent, most preferably selected from a phenolic or quaternary ammonium salt; the remainder of the composition being the volatile solvent or solvent-system.

Preferably the film-forming copolymer will incorporate about 50-95 mol-% of the hydrophilic monomer, most preferably 2-hydroxyethylmethacrylate or 2-hydroxyethylacrylate; and about 10-35 mol-% of a $C_5$-$C_8$-cycloalkyl acrylate or methacrylate, an aromatic acrylate or methacrylate or mixtures thereof. Optionally, a higher(alkyl)acrylate or methacrylate monomer will also be included in the copolymer, replacing the cycloalkyl and/or aromatic monomer to the extent of about 25-75 mol-%. Minor amounts of adjuvants such as an indicator of germicide level, fragrance, surfactants or dyes may also be included in the present compositions, insofar as they are compatible with the film-forming process. For example, about 0.5-5% of a compatible surfactant can be included in the present compositions to enhance their cleaning power.

The finished disinfectant compositions are homogeneous liquids which are applied to the surfaces to be treated by dipping, spraying, brushing, roller coating, pad coating or using similar coating procedures. For household applications, hand-operated pump-type or pressurized aerosol sprayers are effective. Although the present compositions are particularly adapted to adhere to hard surfaces, they can also be employed to coat or otherwise treat materials such as sponges, flexible plastics, textiles, wood and the like. Generally, the coating process is continued to the extent required to deliver an amount of the liquid composition which rapidly dries to a clear, uniform polymeric film under ambient conditions, e.g., about 25-100 mg/in$^2$ of liquid composition is generally effective to disinfect and impart prolonged antimicrobial protection to tile surfaces.

The germicidal films are glossy, resistant to mild abrasion and are not broken or substantially depleted of biocide by repeated wettings. Repeated application of the liquid compositions does not result in film buildup since the solvents present can act to resolubilize and level the prior-applied film.

The invention will be further described by reference to the following detailed examples.

Example 1. Copolymer Preparation

Cyclohexylmethacrylate, 5 mol-% (2.46 g), isodecyl methacrylate, 5 mol-% (3.31g) and 2-hydroxyethyl methacrylate 90 mol-% (34.23g) were dissolved in 160 ml of 95% ethyl alcohol and 0.4 g of dibenzoyl peroxide were added. The solution was bubbled with nitrogen for 10 minutes and heated in a closed system (pressure bottle) for 8 hours at 80°C. The resulting solution of the copolymer was used for the preparation of disinfectant compositions.

Example 2. Copolymer Preparation

A copolymer solution was prepared by the procedure of Example 1, with the exception that 3.0 mol-% cyclohexyl methacrylate, 7 mol-% isodecyl methacrylate and 90 mol-% 2-hydroxyethylmethacrylate were copolymerized.

Example 3. Copolymer Preparation

A copolymer solution was prepared by the procedure of Example 1, except that 7.0 mol-% cyclohexyl methacrylate, 3 mol-% isodecyl methacrylate and 90 mol-% 2-hydroxyethyl methacrylate were employed.

Example 4. Evaluation of Copolymer Film Adhesion

Films of copolymers were cast from solutions prepared according to Examples 1-3 on glazed ceramic bathroom tiles and formica. After drying at ambient temperatures and humidities, the quality of the glossy films was tested. The appearance of the film and the abrasion caused by the application of a wet paper towel after the coated substrate had been immersed for 45 minutes in water were visually evaluated.

## Table I – Film Evaluation

| | On Tile | | On Formica | |
|---|---|---|---|---|
| Copolymer Soln | Appearance | Abrasion | Appearance | Abrasion |
| Example 1 | Clear | None | Clear | None |
| Example 2 | Clear | None | Clear | None |
| Example 3 | Clear | None | Clear | None |

The results summarized on Table I indicate that polymeric films cast from alcohol-water (95:5) solutions of the copolymers of Examples 1-3 exhibit satisfactory physical properties when applied to hard surfaces and subsequently exposed to moisture.

Example 4:

According to the procedure in Example 1, copolymers containing the following hydrophobic cyclic and aliphatic methacrylates can be prepared:

Benzyl methacrylate
Tetrahydrofurfuryl methacrylate
2-Ethylhexyl methacrylate
Isodecyl methacrylate

Lauryl methacrylate
Stearyl methacrylate
Hexyl methacrylate
Phenoxyethyl methacrylate
Isobornyl methacrylate

5 to 50 mol-% of these monomers and/or combinations thereof within these molar limits can be polymerized with 95 to 50 mol% of hydrophilic comonomers such as 2-hydroxyethyl methacrylate, 2- or 3-hydroxy-propyl methacrylates and diacetone acrylamide. In each instance in which an aromatic comonomer was employed alone or in admixture with an alkyl ester comonomer, adhesion to the ceramic tiles and the formica is achieved.

Example 5. Two-Component Copolymeric Films

Copolymer solutions prepared according to the procedure Example 1 which contained only 2-hydroxyethyl methacrylate and a single cycloalkyl, alkyl or aromatic methacrylate were prepared and their films on tiles and formica were evaluated by the procedures of Example 4.

## Table II - Copolymer Films

| Copolymers/Mol% | On Glazed Tile | | On Formica | |
|---|---|---|---|---|
| | :Appearance:Abrasion | | Appearance:Abrasion | |
| THFM/10 - HM/90 | C | N | C | S |
| THMM/20 - HM/80 | C | N | C | S |
| IBOM/10 - HM/90 | C | N | C | S |
| IBOM/20 - HM/80 | C | N | C | P |
| BEM/10 - HM/90 | C | N | C | P |
| BEM/20 - HM/80 | C | N | C | P |
| CHM/10 - HM/90 | C | N | C | P |
| CHM/20 - HM/80 | C | N | C | P |
| LM/10 - HM/90 | C | S,P | C | S |
| LM/20 - HM/80 | C | S,P | C | S |
| STEM/10 - HM/90 | C | S,P | C | P |
| STEM/20 - HM/80 | C | S,P | C | P |
| ISDM/10 - HM/90 | C | S,P | C | N |
| ISDM/20 - HM/80 | C | S,P | C | N |
| HEXM/10 - HM/90 | C | S,P | C | N |
| HEXM/20 - HM/80 | C | S,P | C | N |

Monomer Abbreviations:

DAA - Diacetone Acrylamide; HM - 2-Hydroxyethyl methacrylate; HPM - 2-Hydroxypropyl methacrylate; STM - Stearyl methacrylate; LM - Lauryl methacrylate; ISDM - Isodecyl methacrylate; THFM - Tetrahydrofurfuryl methacrylate; IBOM - Isobornyl methacrylate; BEM - Benzyl methacrylate; CHM - Cyclohexyl methacrylate; HEXM - Hexyl methacrylate; MA - Methacrylic acid.

Abbreviations for film Evaluation:

H - Hazy; C - Clear; P - Peels off; S - Soft, scratches; N - None.

The copolymers containing only a cycloalkyl or aromatic ester comonomer performed well on tiles but only weakly adhered to formica. Copolymers comprising $C_{11}$-$C_{18}$-alkyl comonomers exhibited satisfactory adhesion to formica but performed poorly on tiles. Copolymers comprising only a $C_6$- or $C_{10}$-ester as the comonomer performed poorly in this evaluation.

Example 6. Hydrogel Films

Solutions containing only polymerized hydrophilic monomers were prepared according to the procedure in Example 1, to evaluate the effect of eliminating other comonomers. Films were cast and their adhesion and abrasion resistance to glazed tiles and formica were evaluated after a 45 min. immersion in water.

## Table III - Homopolymeric Films

| Polymer/Mol% | : | Appearance | : | Abrasion by Paper Towel |
|---|---|---|---|---|
| DAA/100 | : | H | : | P |
| HM/100 | : | H | : | P |
| HPM/100 | : | H | : | P |
| MA/100 | : | C | : | P |

As indicated by the data summarized in Table III, typical hydrophilic polymers like DAA and HM exhibited high swelling, to yield often hazy films which peeled off the substrates.

Example 7. Film-Forming Disinfectant Compositions

A. Preparation of Coated Tiles

Two film-forming liquid disinfectant solutions were prepared by combining the copolymer solution of Example 1 with either a quaternary ammonium salt germicide ("quat" - a mixture of myristyl(dimethyl)-(benzyl)ammonium chloride and dodecyl(dimethyl)(p-ethyl-benzyl) ammonium chloride, BTC 2125 M® - 80% active, Onyx Chemical Co., Jersey City, N.J., or a phenol (2-benzyl-4-chlorophenol) germicide, and isopropanol, as indicated on Table IV. Films of the disinfectant composition were cast onto glazed and unglazed ceramic tiles to the extent indicated by spraying the tiles with the liquid compositions and allowing the wet coatings to air dry. Clear, abrasion-resistant polymeric films resulted.

## Table IV - Disinfectant Compositions

### Weight Percent in Formulation

| Copolymer Solution | Quat | Phenol | i-PrOH |
|---|---|---|---|
| 9.6 | 3.8 | - | 86.6 |
| 9.6 | - | 3.8 | 86.6 |
| 9.6 | 3.8 | - | 86.6 |
| 9.6 | - | 3.8 | 86.6 |
| 4.9 | 0.49 | - | 43.9[+] |

### Coated Tiles

| Tile Type | Formula On Tile (g) | Treated Tile Area | $Mg/in^2$ on tile of: Formula | Germicide |
|---|---|---|---|---|
| Glazed | 0.7 | 16 $in^2$ | 44.0 | 1.3 |
| Glazed | 0.7 | 16 $in^2$ | 44.0 | 1.7 |
| Porous | 0.9 | 11.4 $in^2$ | 79.0 | 2.4 |
| Porous | 0.8 | 11.4 $in^2$ | 79.0 | 2.7 |
| -- | -- | -- | -- | -- |

[+] Composition also incorporated 49.41% water and 1.3% nonoxynol-9 (nonionic surfactant).

B. Evaluation of Bacteriostatic Action-Single Inoculation

One ml of a bacterial inoculum (E. coli, $2.6 \times 10^7$ CFU/ml) was spread on each of five tiles coated with the four compositions as indicated in Table IV. Five uncoated glazed and five uncoated porous (unglazed) ceramic tiles were used as controls. Each tile was sprayed with water daily for five days and allowed to air-dry. When dry, rodac contact agar plate sampling of one "new" tile not previously sampled was performed. Previously sampled tiles were resampled. Thus, on the fifth date of testing, one tile had been sampled five times, one four, one three, etc. The results of this testing are summarized on Table V.

## Table V – Bacteriostatic Film Evaluation

| Tile # | Type | Rodac Sample (CFU Recovered) | | | | | Tile # | Type | Rodac Sample (CFU) | | | | |
|---|---|---|---|---|---|---|---|---|---|---|---|---|---|
| | | 1 | 2 | 3 | 4 | 5 | | | 1 | 2 | 3 | 4 | 5 |
| 1 | Glazed/Quat | 0 | 0 | 1 | 0 | 0 | 1 | Porous/Quat | 1 | 0 | 0 | 0 | 0 |
| 2 | | | 1 | 0 | 1 | 0 | 2 | | | 3 | 1 | 2 | 1 |
| 3 | | | | 6 | 0 | 0 | 3 | | | | 2 | 2 | 0 |
| 4 | | | | | 1 | 0 | 4 | | | | | 3 | 1 |
| 5 | | | | | | 2 | 5 | | | | | | 2 |
| 1 | Glazed/Phenol | 0 | 0 | 0 | 1 | 0 | 1 | Porous/Phenol | 2 | 1 | 0 | 2 | 0 |
| 2 | | | 0 | 0 | 0 | 1 | 2 | | | 0 | 0 | 2 | 0 |
| 3 | | | | 1 | 0 | 0 | 3 | | | | 3 | 2 | 1 |
| 4 | | | | | 0 | 1 | 4 | | | | | 5 | 1 |
| 5 | | | | | | 1 | 5 | | | | | | 24 |
| 1 | Glazed/Control | 5 | 1 | 19 | 21 | 61 | 1 | Porous/Control | 1 | 0 | 1 | 0 | 2 |
| 2 | | | 8 | 22 | 90 | 32 | 2 | | | 9 | 17 | 12 | 0 |
| 3 | | | | 8 | 13 | 14 | 3 | | | | 50 | 21[a] | 0 |
| 4 | | | | | 13 | 44 | 4 | | | | | 322[b] | 5 |

a.  3 mold colonies also present.

b.  4 mold colonies also present.

The results summarized on Table V demonstrate that films prepared from the formulations of Table IV are effective in reducing a subsequently-introduced bacterial population. Recovery of bacteria from the control tiles was continuous from day one to day five. Recovery from the treated tiles was not observed or was consistently lower, indicating a static activity situation. The disinfectant films were somewhat less effective on porous than on glazed tiles.

C. Evaluation of Bacteriostatic Action-Multiple Inoculation

The film-forming compositions summarized on Table VI were prepared and employed to cast disinfectant films on glazed tiles (16 in$^2$) as described in Example VII(A).

## Table VI - Disinfectant Compositions

| Weight Percent in Formula | | | | Coated Tiles | | |
|---|---|---|---|---|---|---|
| | | | | | Mg/in$^2$ | |
| Copolymer Solution | Quat | Phenol | i-ProH | Tile | Formula | Germicide |
| 9.6* | 3.8 | – | 86.6 | A | 38.0 | 1.1 |
| 9.6* | – | 3.8 | 86.6 | B | 44.0 | 1.6 |
| 8.9+ | 3.6 | – | 86.6 | C | 38.0 | 1.1 |
| 9.4+ | – | 3.7 | 86.6 | D | 38.0 | 1.4 |

* Solution of Ex. 1. + Solution of Ex. 2.

Treated and untreated (control) tiles were inoculated with either E. coli or S. aureus (18-24 hr. broth cultures, 10$^6$ CFU/ml) and allowed to air dry. A one inch square sterile cloth swatch was moistened in sterile saline and employed to rub the tile surface in four back and forth motions. The cloth was placed into Letheen broth for enumeration of surviving organisms. The tiles were washed (sampled) daily for 14 days with reinoculation at days 5, 7, 9 and 11. The results of this evaluation are summarized in Table VII.

## Table VII - Prolonged-Release Films

### E. Coli inoculations
Coated Tiles of Table VI

| Day | Quat (A) | Quat (C) | Phenol (B) | Phenol (D) | Control |
|-----|----------|----------|------------|------------|---------|
| 1* | 0 | 0 | 3 | 15 | 2 |
| 2 | 0 | 0 | 0 | 0 | 1 |
| 3 | 0 | 0 | 0 | 0 | 0 |
| 4 | 0 | 0 | 3 | 1 | 0 |
| 5* | 2 | 2 | 1 | 1 | 74 |
| 6 | 0 | 0 | 0 | 1 | 0 |
| 7* | 0 | 0 | 16 | 4 | 1 |
| 8 | 0 | 0 | 0 | 0 | 0 |
| 9* | 0 | 0 | 1 | 1 | 0 |
| 10 | 1 | 0 | 1 | 0 | 0 |
| 11* | 0 | 0 | 0 | 1 | 930 |
| 12 | 0 | 0 | 0 | 0 | 2 |
| 13 | 0 | 0 | 1 | 11 | 29 |
| 14 | 0 | 0 | 0 | 0 | 0 |

## S. aureus inoculations

| | | | | | |
|---|---|---|---|---|---|
| 1* | 1 | 0 | 38 | 18 | 395 |
| 2 | 3 | 0 | 8 | 2 | 474 |
| 3 | 1 | 0 | 0 | 0 | 35 |
| 4 | 0 | 0 | 0 | 0 | 3 |
| 5* | 0 | 0 | 40 | 53 | 19000 |
| 6 | 0 | 0 | 0 | 1 | 0 |
| 7 | 0 | 0 | 6 | 0 | 1000 |
| 8 | 0 | 0 | 1 | 1 | 54 |
| 9* | 2 | 0 | 1 | 1 | 50 |
| 10 | 1 | 0 | 0 | 1 | 1 |
| 11* | 2 | 5 | 1 | 3 | 1200 |
| 12 | 0 | 2 | 0 | 0 | 1 |
| 13 | 0 | 1 | 29 | 45 | 6800 |
| 14 | 0 | 0 | 23 | 0 | 270 |

* Inoculation

The observations summarized in Table VII indicate that disinfectant films prepared from the formulations of Table VI remain adherent, resistant to microbial contamination, and exhibit prolonged germicidal action after at least five inoculations and 14 water washes.

Example 8. Effectiveness of Liquid Disinfectant Compositions as Germicidal Sprays.

The liquid disinfectant compositions were prepared by combining the individual components as summarized in Table VIII.

## Table VIII – Disinfectant Compositions

Formulation

| Component | I Grams | Wt-% | II Grams | Wt-% |
|---|---|---|---|---|
| Copolymer Solution of Example 2. | 20.0 | 4.9 | 20.0 | 4.9 |
| Quat* | 8.0 | 2.0 | - | - |
| Phenol+ | - | - | 8.0 | 2.0 |
| Isopropanol | 180.0 | 44.1 | 180.0 | 44.1 |
| Water | 200.0 | 49.0 | 200.0 | 49.0 |

\* BTC 2125M, + 2-Benzyl-4-chlorophenol

Formulations I and II were evaluated as spray disinfectants on glass slides inoculated with S. aureus using a two minute exposure period by AOAC Method 4.033-4.035, AOAC Methods of Analysis (13th ed. 1980) at pages 63-64, the disclosure of which is incorporated by reference herein. All thirty inoculated slides sprayed with quat formulation I were negative for subsequent growth, as were 16 of 21 inoculated slides sprayed with phenolic formulation II. These results demonstrate that the film-forming liquid compositions of the present invention are effective to sanitize or substantially disinfect contaminated hard surfaces upon initial contact of the composition with the surface. As demonstrated by Example 7, the resultant films then act to impart prolonged residual antimicrobial properties to the treated surface, even after repeated water washes and microbial contamination.

The invention has been described with reference to various specific and preferred embodiments and techniques. However, it should be understood that many variations and modifications may be made while remaining within the spirit and scope of the invention.

## Claims

1. A liquid composition capable of forming an antimicrobial film which is substantially free of a complexed inorganic metal salt, said composition comprising a solution of a minor amount of a film-forming, water-insoluble copolymer in a major amount of a volatile solvent, said copolymer comprising (a) about 20-99.5 mol-% of said copolymer of a monomer having a hydrophilic functional group, and (b) about 0.5-80 mol-% of said copolymer of an alpha, beta-unsaturated carboxylic acid ester selected from the group consisting of aromatic esters, cycloalkyl esters, tetrahydrofurfuryl esters and mixtures thereof, and an amount of a germicidal agent effective to impart prolonged antimicrobial properties to the film.

2. The composition of claim 1 wherein component (b) comprises about 1-90 mol-% of an alkyl or (alkoxy)-alkyl ester of an alpha, beta-unsaturated acid.

3. The composition of claim 2 wherein the alkyl ester is a $C_5$-$C_{22}$ alkyl ester and the (alkoxy)alkyl ester is a ($C_1$-$C_4$) alkoxy ($C_1$-$C_4$) alkyl ester.

4. The composition of any of claims 1 to 3 wherein the copolymer comprises about 50-95 mol-% of the monomer of component (a).

5. The composition of claim 4 wherein the monomer of component (a) comprises a hydroxyalkyl ester of an alpha, beta-unsaturated carboxylic acid.

6. The composition of claim 5 wherein the hydroxy alkyl ester comprises a hydroxyalkyl acrylate or a hydroxy alkyl methacrylate.

15

7. The composition of any of claims 1 to 6 , wherein the alpha, beta-unsaturated carboxylic acid comprises acrylic acid, methacrylic acid or itaconic acid.

8. The composition of any of claims 1 to 7 wherein the copolymer comprises about 0.25-10% of the composition.

9. The composition of any of claims 1 to 8 wherein the germicidal agent comprises a phenolic compound or a quaternary ammonium salt.

10. The composition of claim 9 wherein the composition comprises about 0.01-10% of the germicidal agent.

11. The composition of any of claims 1 to 10 wherein the germicidal agent comprises about 0.01-50% by weight of the dissolved copolymer.

12. The composition of any of claims 1 to 11 wherein the solvent comprises a $C_1$-$C_4$-alkanol or a mixture of water and a $C_1$-$C_4$ alkanol.

13. A liquid disinfectant composition capable of forming an antimicrobial film which is substantially free of a complexed inorganic metal salt, said composition consisting essentially of a solution, in a major amount of a volatile solvent, of a minor amount of a film-forming copolymer of (a) about 50-95 mol-% of a hydrophilic monomer selected from the group consisting of 2-hydroxyethyl-methacrylate, 2-hydroxypropyl-methacrylate, 3-hydroxypropyl-methacrylate and diacetone acrylamide, and (b) about 1-10 mol-% of said copolymer of an aromatic or cycloalkyl ester or tetrahydrofurfuryl ester of an alpha, beta-unsaturated acid and (c) about 1-10 mol-% of said copolymer of a $C_5$-$C_{20}$ alkyl ester or an (alkoxy)alkyl ester of an alpha, beta-unsaturated acid and an amount of a germicidal agent effective to impart prolonged antimicrobial properties to the film.

14. The composition of claim 13 wherein the film-forming copolymer is present at a concentration of about 0.5-5% of the composition.

15. The composition of claim 13 or 14 wherein the unsaturated acid is methacrylic acid, acrylic acid or itaconic acid.

16. The composition of claim 15 wherein the "aromatic ester" is a phenyl, benzyl or tetrahydrofurfuryl ester.

17. The composition of any of claims 13 to 16 wherein the cycloalkyl ester is a cyclohexyl, isobornyl or adamantyl ester.

18. The composition of any of claims 13 to 17 wherein the germicidal agent is present at a concentration of about 0.05-5% of the composition and is a germicidal phenolic compound or a quaternary ammonium salt.

19. The composition of claim 18 wherein the quaternary ammonium salt is a $C_{10}$-$C_{20}$-n-alkyl (dimethyl)-benzyl ammonium salt.

20. The composition of claim 18 wherein the phenolic compound is 2-benzyl-4-chlorophenol.

21. The composition of any of claims 13 to 20 wherein the germicidal agent comprises about 0.25-20% by weight of the germicidal agent.

22. The composition of any of claims 13 to 21 wherein the solvent is a water-alcohol mixture.

23. The composition of any of claims 13 to 21 wherein the solvent is a lower(alkanol) and is present at a concentration of about 85% of the composition.

24. The composition of any of claims 13 to 23 wherein at least about 85% by weight of the composition is

16

EP 0 194 770 B1

a mixture of alcohol and water.

25. The method for disinfecting and imparting prolonged germicidal properties to a hard porous or nonporous surface comprising coating said surface with the composition of any of claims 1 to 24 , and removing the solvent from said coating to form a germicidal, water-resistant polymeric film thereupon.

26. The method of claim 25 wherein about 10-100 mg of the composition is applied per square inch of surface.

**Claims for the following Contracting State: AT**

1. A liquid process for preparing a liquid composition capable of forming an antimicrobial film which is substantially free of a complexed inorganic metal salt, said process comprising forming a composition comprising a solution of a minor amount of a film-forming, water-insoluble copolymer in a major amount of a volatile solvent, said copolymer comprising (a) about 20-99.5 mol-% of said copolymer of a monomer having a hydrophilic functional group, and (b) about 0.5-80 mol-% of said copolymer of an alpha, beta-unsaturated carboxylic acid ester selected from the group consisting of aromatic esters, cycloalkyl esters, tetrahydrofurfuryl esters and mixtures thereof, and an amount of a germicidal agent effective to impart prolonged antimicrobial properties to the film.

2. The process of claim 1 wherein component (b) comprises about 1-90 mol-% of an alkyl or (alkoxy)alkyl ester of an alpha, beta-unsaturated acid.

3. The process of claim 2 wherein the alkyl ester is a $C_5$-$C_{22}$ alkyl ester and the (alkoxy)alkyl ester is a $(C_1$-$C_4)$ alkoxy $(C_1$-$C_4)$ alkyl ester.

4. The process of any of claims 1 to 3 wherein the copolymer comprises about 50-95 mol-% of the monomer of component (a).

5. The process of claim 4 wherein the monomer of component (a) comprises a hydroxyalkyl ester of an alpha, beta-unsaturated carboxylic acid.

6. The process of claim 5 wherein the hydroxy alkyl ester comprises a hydroxyalkyl acrylate or a hydroxy alkyl methacrylate.

7. The process of any of claims 1 to 6, wherein the alpha, beta-unsaturated carboxylic acid comprises acrylic acid, methacrylic acid or itaconic acid.

8. The process of any of claims 1 to 7 wherein the copolymer comprises about 0.25-10% of the composition.

9. The process of any of claims 1 to 8 wherein the germicidal agent comprises a phenolic compound or a quaternary ammonium salt.

10. The process of claim 9 wherein the composition comprises about 0.01-10% of the germicidal agent.

11. The process of any of claims 1 to 10 wherein the germicidal agent comprises about 0.01-50% by weight of the dissolved copolymer.

12. The process of any of claims 1 to 11 wherein the solvent comprises a $C_1$-$C_4$-alkanol or a mixture of water and a $C_1$-$C_4$ alkanol.

13. A process for preparing a liquid disinfectant composition capable of forming an antimicrobial film which is substantially free of a complexed inorganic metal salt, said process comprising forming a composition consisting essentially of a solution, in a major amount of a volatile solvent, of a minor amount of a film-forming copolymer of (a) about 50-95 mol-% of a hydrophilic monomer selected from the group consisting of 2-hydroxyethyl-methacrylate, 2-hydroxypropyl-methacrylate, 3-hydroxypropyl-methacrylate and diacetone acrylamide, and (b) about 1-10 mol-% of said copolymer of an aromatic or

17

EP 0 194 770 B1

cycloalkyl ester or tetrahydrofurfuryl ester of an alpha, beta-unsaturated acid and (c) about 1-10 mol-% of said copolymer of a $C_5$-$C_{20}$ alkyl ester or an (alkoxy)alkyl ester of an alpha, beta-unsaturated acid and an amount of a germicidal agent effective to impart prolonged antimicrobial properties to the film.

14. The process of claim 13 wherein the film-forming copolymer is present at a concentration of about 0.5-5% of the composition.

15. The process of claim 13 or 14 wherein the unsaturated acid is methacrylic acid, acrylic acid or itaconic acid.

16. The process of claim 15 wherein the "aromatic ester" is a phenyl, benzyl or tetrahydrofurfuryl ester.

17. The process of any of claims 13 to 16 wherein the cycloalkyl ester is a cyclohexyl, isobornyl or adamantyl ester.

18. The process of any of claims 13 to 17 wherein the germicidal agent is present at a concentration of about 0.05-5% of the composition and is a germicidal phenolic compound or a quaternary ammonium salt.

19. The process of claim 18 wherein the quaternary ammonium salt is a $C_{10}$-$C_{20}$-n-alkyl (dimethyl)benzyl ammonium salt.

20. The process of claim 18 wherein the phenolic compound is 2-benzyl-4-chlorophenol.

21. The process of any of claims 13 to 20 wherein the germicidal agent comprises about 0.25-20% by weight of the germicidal agent.

22. The process of any of claims 13 to 21 wherein the solvent is a water-alcohol mixture.

23. The process of any of claims 13 to 21 wherein the solvent is a lower(alkanol) and is present at a concentration of about 85% of the composition.

24. The process of any of claim 13 to 23 wherein at least about 85% by weight of the composition is a mixture of alcohol and water.

25. The method for disinfecting and imparting prolonged germicidal properties to a hard porous or nonporous surface comprising coating said surface with the composition prepared by a process of any of claims 1 to 24, and removing the solvent from said coating to form a germicidal, water-resistant polymeric film thereupon.

26. The method of claim 25 wherein about 10-100 mg of the composition is applied per square inch of surface.

**Revendications**

1. Composition liquide, capable de former une pellicule antimicrobienne qui est essentiellement dépourvue d'un sel minéral de métal complexé, ladite composition comprenant une solution d'une quantité mineure d'un copolymère filmogène, insoluble dans l'eau, dans une quantité majeure d'un solvant volatil, ledit copolymère comprenant (a) environ 20 à 99,5 mol % dudit copolymère d'un monomère ayant un groupe fonctionnel hydrophile, et (b) environ 0,5 à 80 mol % dudit copolymère d'un ester d'acide carboxylique insaturé en $\alpha$-$\beta$, choisi dans l'ensemble consistant en des esters aromatiques, des esters de cycloalkyle, des esters de tétrahydrofurfuryle et leurs mélanges, et une quantité d'un agent germicide capable de conférer à la pellicule des propriétés antimicrobiennes prolongées.

2. Composition selon la revendication 1, dans laquelle le constituant (b) comprend environ 1 à 90 mol % d'un ester d'alkyle ou d'alcoxy-alkyle d'un acide insaturé en $\alpha$-$\beta$.

3. Composition selon la revendication 2, dans lequelle l'ester alkylique est un ester d'alkyle en $C_5$-$C_{22}$, et

18

l'ester d' (alcoxy)alkyle est un ester d'alcoxy (en $C_1$ à $C_4$) alkyle (en $C_1$ à $C_4$).

4. Composition selon l'une quelconque des revendications 1 à 3, dans laquelle le copolymère comprend environ 50 à 95 mol % du monomère du constituant (a).

5. Composition selon la revendication 4, dans laquelle le monomère du constituant (a) comprend un ester hydroxyalkylique d'un acide carboxylique insaturé en $\alpha$-$\beta$.

6. Composition selon la revendication 5, dans laquelle l'ester d'hydroxyalkyle comprend un acrylate d'hydroxyalkyle ou un méthacrylate d'hydroxyalkyle.

7. Composition selon l'une quelconque des revendications 1 à 6, dans laquelle l'acide carboxylique insaturé en $\alpha$-$\beta$ comprend l'acide acrylique, l'acide méthacrylique ou l'acide itaconique.

8. Composition selon l'une quelconque des revendications 1 à 7, dans laquelle le copolymère représente environ 0,25 à 10 % de la composition.

9. Composition selon l'une quelconque des revendications 1 à 8, dans laquelle l'agent germicide comprend un composé phénolique ou un sel d'ammonium quaternaire.

10. Composition selon la revendication 9, dans laquelle la composition comprend environ 0,01 à 10 % de l'agent germicide.

11. Composition selon l'une quelconque des revendications 1 à 10, dans laquelle l'agent germicide comprend environ 0,01 à 50 % en poids du copolymère dissous.

12. Composition selon l'une quelconque des revendications 1 à 11, dans laquelle le solvant comprend un alcanol en $C_1$ à $C_4$ ou un mélange d'eau et d'un alcanol en $C_1$ à $C_4$.

13. Composition désinfectante liquide, capable de former une pellicule antimicrobienne, qui est essentiellement dépourvue d'un sel minéral de métal complexé, ladite composition consistant essentiellement en une solution, dans une quantité majeure d'un solvant volatil, d'une quantité mineure d'un copolymère filmogène de (a) environ 50 à 95 mol % d'un monomère hydrophile, choisi dans l'ensemble consistant en le méthacrylate de 2-hydroxyéthyle, le méthacrylate de 2-hydroxypropyle, le méthacrylate de 3-hydroxypropyle et le diacétoneacrylamide, et (b) environ 1 à 10 mol % dudit copolymère d'un ester aromatique ou de cycloalkyle ou d'un ester tétrahydrofurfurylique d'un acide insaturé en $\alpha$-$\beta$, et (c) environ 1 à 10 mol % dudit copolymère d'un ester alkylique en $C_5$ à $C_{20}$ ou d'un ester d'(alcoxy)alkyle d'un acide insaturé en $\alpha$-$\beta$ et une quantité d'un agent germicide capable de conférer efficacement à la pellicule des propriétés antimicrobiennes prolongées.

14. Composition selon la revendication 13, dans laquelle le copolymère filmogène est présent en une concentration d'environ 0,5 à 5 % de la composition.

15. Composition selon la revendication 13 ou 14, dans laquelle l'acide insaturé est l'acide méthacrylique, l'acide acrylique ou l'acide itaconique.

16. Composition selon la revendication 15, dans laquelle l'"ester aromatique" est un ester de phényle, de benzyle ou de tétrahydrofurfuryle.

17. Composition selon l'une quelconque des revendications 13 à 16, dans laquelle l'ester de cycloalkyle est un ester de cyclohexyle, d'isobornyle ou d'adamantyle.

18. Composition selon l'une quelconque des revendications 13 à 17, dans laquelle l'agent germicide est présent en une concentration d'environ 0,05 à 5 % de la composition, et cet agent est un composé phénolique germicide ou un sel d'ammonium quaternaire germicide.

19. Composition selon la revendication 18, dans laquelle le sel d'ammonium quaternaire est un sel de n-alkyl(en $C_{10}$ à $C_{20}$) (diméthyl)benzylammonium.

20. Composition selon la revendication 18, dans laquelle le composé phénolique est le 2-benzyl-4-chlorophénol.

21. Composition selon l'une quelconque des revendications 13 à 20, dans laquelle l'agent germicide représente environ 0,25 à 20 % en poids de l'agent germicide.

22. Composition selon l'une quelconque des revendications 13 à 21, dans laquelle le solvant est un mélange d'eau et d'un alcool.

23. Composition selon l'une quelconque des revendications 13 à 21, dans laquelle le solvant est un alcanol inférieur et il est présent en une concentration d'environ 85 % de la composition.

24. Composition selon l'une quelconque des revendications 13 à 23, dans laquelle au moins 85 % en poids, environ, de la composition sont constitués par un mélange d'alcool et d'eau.

25. Procédé pour désinfecter une surface dure, poreuse ou non poreuse, et lui conférer des propriétés germicides prolongées, le procédé comprenant le revêtement de ladite surface par la composition selon l'une quelconque des revendications 1 à 24, et l'enlèvement du solvant dudit revêtement pour former sur la surface une pellicule polymère germicide, résistant bien à l'eau.

26. Procédé selon la revendication 25, dans lequel on applique environ 10 à 100 mg de la composition par pouce$^2$ (6,45 cm$^2$) de surface.

**Revendications pour l'Etat contractant suivant: AT**

1. Procédé pour préparer une composition liquide, capable de former une pellicule antimicrobienne, qui est essentiellement dépourvue d'un sel minéral de métal complexé, ledit procédé comprenant la formation d'une composition comprenant une solution d'une quantité mineure d'un copolymère filmogène, insoluble dans l'eau, dans une quantité majeure d'un solvant volatil, ledit copolymère comprenant (a) environ 20 à 99,5 mol % dudit copolymère d'un monomère ayant un groupe fonctionnel hydrophile, et (b) environ 0,5 à 80 mol %, dudit copolymère, d'un ester d'acide carboxylique insaturé en $\alpha$-$\beta$, choisi dans l'ensemble constitué par des esters aromatiques, des esters cycloalkyliques, des esters tétrahydrofurfuryliques et leurs mélanges, et une quantité d'un agent germicide efficace pour conférer à la pellicule des propriétés antimicrobiennes prolongées.

2. Procédé selon la revendication 1, dans lequel le constituant (b) comprend environ 1 à 90 mol % d'un ester d'alkyle ou d'(alcoxy)alkyle d'un acide insaturé en $\alpha$-$\beta$.

3. Procédé selon la revendication 2, dans lequel l'ester alkylique est un ester d'alkyle en $C_5$-$C_{22}$, et l'ester d'(alcoxy)alkyle est un ester d'alcoxy (en $C_1$ à $C_4$) alkyle (en $C_1$ à $C_4$).

4. Procédé selon l'une quelconque des revendications 1 à 3, dans lequel le copolymère comprend environ 50 à 95 mol % du monomère du constituant (a).

5. Procédé selon la revendication 4, dans lequel le monomère du constituant (a) comprend un ester hydroxyalkylique d'un acide carboxylique insaturé en $\alpha$-$\beta$.

6. Procédé selon la revendication 5, dans lequel l'ester hydroxyalkylique comprend un acrylate d'hydroxyalkyle ou un méthacrylate d'hydroxyalkyle.

7. Procédé selon l'une quelconque des revendications 1 à 6, dans lequel l'acide carboxylique insaturé en $\alpha$-$\beta$ comprend l'acide acrylique, l'acide méthacrylique ou l'acide itaconique.

8. Procédé selon l'une quelconque des revendications 1 à 7, dans lequel le copolymère représente environ 0,25 à 10 % de la composition.

9. Procédé selon l'une quelconque des revendications 1 à 8, dans lequel l'agent germicide comprend un composé phénolique ou un sel d'ammonium quaternaire.

**10.** Procédé selon la revendication 9, dans lequel ta composition comprend environ 0,01 à 10 % de l'agent germicide.

**11.** Procédé selon l'une quelconque des revendications 1 à 10, dans lequel l'agent germicide représente environ 0,01 à 50 % du poids du copolymère dissous.

**12.** Procédé selon l'une quelconque des revendications 1 à 11, dans lequel le solvant comprend un alcanol en $C_1$ à $C_4$ ou un mélange d'eau et d'un alcanol en $C_1$ à $C_4$.

**13.** Procédé pour préparer une composition désinfectante liquide, capable de former une pellicule antimicrobienne qui est essentiellement dépourvue d'un sel minéral de métal complexé, ledit procédé comprenant la formation d'une composition consistant essentiellement en une solution, dans une quantité majeure d'un solvant volatil, d'une quantité mineure d'un copolymère filmogène de (a) environ 50 à 95 mol % d'un monomère hydrophile, choisi dans l'ensemble consistant en le méthacrylate de 2-hydroxyéthyle, le méthacrylate de 2-hydroxypropyle, le méthacrylate de 3-hydroxypropyle et le diacétoneacrylamide, et (b) environ 1 à 10 mol % dudit copolymère d'un ester aromatique ou cycloalkylique ou d'un ester tétrahydrofurfurylique d'un acide insaturé en $\alpha$-$\beta$, et (c) environ 1 à 10 mol % dudit copolymère d'un ester d'alkyle en $C_5$ à $C_{20}$ ou d'un ester d'(alcoxy)alkyle d'un acide insaturé en $\alpha$-$\beta$ et une quantité d'un agent germicide capable de conférer efficacement à la pellicule des propriétés antimicrobiennes prolongées.

**14.** Procédé selon la revendication 13, dans lequel le copolymère filmogène est présent en une concentration représentant environ 0,5 à 5 % de la composition.

**15.** Procédé selon la revendication 13 ou 14, dans lequel l'acide insaturé est l'acide méthacrylique, l'acide acrylique ou l'acide itaconique.

**16.** Procédé selon la revendication 15, dans lequel l' "ester aromatique" est un ester de phényle, de benzyle ou de tétrahydrofurfuryle.

**17.** Procédé selon l'une quelconque des revendications 13 à 16, dans lequel l'ester de cycloalkyle est un ester de cyclohexyle, d'isobornyle ou d'adamantyle.

**18.** Procédé selon l'une quelconque des revendications 13 à 17, dans lequel l'agent germicide est présent en une concentration représentant environ 0,05 à 5 % de la composition, et il est un un composé phénolique germicide ou un sel d'ammonium quaternaire.

**19.** Procédé selon la revendication 18, dans lequel le sel d'ammonium quaternaire est un sel de n-alkyl(en $C_{10}$ à $C_{20}$) (diméthyl)benzylammonium.

**20.** Procédé selon la revendication 18, dans lequel le composé phénolique est le 2-benzyl-4-chlorophénol.

**21.** Procédé selon l'une quelconque des revendications 13 à 20, dans lequel l'agent germicide comprend environ 0,25 à 20 % en poids de l'agent germicide.

**22.** Procédé selon l'une quelconque des revendications 13 à 21, dans lequel le solvant est un mélange d'eau et d'un alcool.

**23.** Procédé selon l'une quelconque des revendications 13 à 21, dans lequel le solvant est un alcanol inférieur,et il est présent en une concentration représentant environ 85 % de la composition.

**24.** Procédé selon l'une quelconque des revendications 13 à 23, dans lequel au moins 85 % en poids, environ de la composition sont constitués par un mélange d'alcool et d'eau.

**25.** Procédé pour désinfecter et conférer à une substance dure, poreuse ou non poreuse, des propriétés germicides prolongées, ce procédé comprenant le revêtement de ladite surface par la composition préparée par un procédé selon l'une quelconque des revendications 1 à 24, et l'enlèvement du solvant dudit revêtement pour former sur la surface une pellicule polymère germicide, résistant bien à l'eau.

**26.** Procédé selon la revendication 25, dans lequel environ 10 à 100 mg de la composition sont appliqués par pouce$^2$ (6,45 cm$^2$) de surface.

**Patentansprüche**

1. Flüssige Mischung, welche befähigt ist einen im wesentlichen von komplexierten anorganischen Metallsalzen freien antimikrobiellen Film zu bilden und eine Lösung einer geringeren Menge eines filmbildenden und wasserunlöslichen Copolymers in einer größeren Menge eines flüchtigen Lösungsmittels und ein germizides Mittel in einer dem Film lang anhaltende antimikrobielle Eigenschaften erteilenden Menge enthält, wobei das Copolymer (a) in einer Menge von etwa 20 bis 99,5 mol-% des Copolymers an einem hydrophile funktionelle Gruppen aufweisenden Monomer und (b) etwa 0,5 bis 80 mol-% des Copolymers an einem aus aromatischen Estern, Cycloalkylestern, Tetrahydrofurfurylestern und Mischungen hievon ausgewählten Ester einer α,β-ungesättigten Carbonsäure aufweist.

2. Mischung nach Anspruch 1, worin die Komponente (b) etwa 1 bis 90 mol-% eines Alkyl- oder (Alkoxy)-alkylesters einer α,β-ungesättigten Säure ausmacht.

3. Mischung nach Anspruch 2, worin der Alkylester ein C$_5$-C$_{22}$-Alkylester und der (Alkoxy)alkylester ein (C$_1$-C$_4$)Alkoxy-(C$_1$-C$_4$)alkylester ist.

4. Mischung nach irgendeinem der Ansprüche 1 bis 3, worin das Copolymer etwa 50 bis 95 mol-% des Monomers der Komponente (a) enthält.

5. Mischung nach Anspruch 4, worin das Monomer der Komponente (a) einen Hydroxyalkylester einer α,β-ungesättigten Carbonsäure enthält.

6. Mischung nach Anspruch 5, worin der Hydroxyalkylester ein Hydroxyalkylacrylat oder ein Hydroxyalkylmethacrylat enthält.

7. Mischung nach irgendeinem der Ansprüche 1 bis 6, worin die α,β-ungesättigte Carbonsäure Acrylsäure, Methacrylsäure oder Itaconsäure umfaßt.

8. Mischung nach irgendeinem der Ansprüche 1 bis 7, worin das Copolymer etwa 0,25 bis 10 % der Mischung ausmacht.

9. Mischung nach irgendeinem der Ansprüche 1 bis 8, worin das germizide Mittel eine Phenolverbindung oder ein quaternäres Ammoniumsalz enthält.

10. Mischung nach Anspruch 9, worin die Mischung etwa 0,01 bis 10 % an germizidem Mittel enthält.

11. Mischung nach irgendeinem der Ansprüche 1 bis 10, worin das germizide Mittel etwa 0,01 bis 50 Gew.-% des gelösten Copolymers ausmacht.

12. Mischung nach irgendeinem der Ansprüche 1 bis 11, worin das Lösungsmittel ein C$_1$-C$_4$-Alkanol oder ein Gemisch aus Wasser und einem C$_1$-C$_4$-Alkanol enthält.

13. Flüssige desinfizierende Mischung, welche befähigt ist einen im wesentlichen von komplexierten anorganischen Metallsalzen freien antimikrobiellen Film zu bilden und im wesentlichen aus einer Lösung, in einer größeren Menge eines flüchtige Lösungsmittels, einer kleineren Menge eines filmbildenden Copolymers aus (a) etwa 50 bis 95 mol-% eines aus 2-Hydroxyäthyl-methacrylat, 2-Hydroxypropyl-methacrylat, 3-Hydroxypropyl-methacrylat und Diacetonacrylamid ausgewählten hydrophilen Monomers und (b) etwa 1 bis 10 mol-% des erwähnten Copolymers eines aromatischen Esters oder Cycloalkylesters oder Tetrahydrofurfurylesters einer α,β-ungesättigten Säure und (c) etwa 1 bis 10 mol-% des Copolymers eines C$_5$-C$_{20}$-Alkylesters oder eines (Alkoxy)alkylesters einer α,β-ungesättigten Säure und einer dem Film lang anhaltende antimikrobielle Eigenschaften erteilenden Menge an einem germiziden Mittel besteht.

14. Mischung nach Anspruch 13, worin das filmbildende Copolymer in einer Menge von etwa 0,5 bis 5 % der Mischung vorliegt.

15. Mischung nach Anspruch 13 oder 14, worin die ungesättigte Säure Methacrylsäure, Acrylsäure oder Itaconsäure ist.

16. Mischung nach Anspruch 15, worin der aromatische Ester ein Phenyl-, Benzyl-, oder Tetrahydrofurfurylester ist.

17. Mischung nach irgendeinem der Ansprüche 13 bis 16, worin der Cycloalkylester ein Cyclohexyl-, Isobornyl- oder Adamantylester ist.

18. Mischung nach irgendeinem der Ansprüche 13 bis 17, worin das germizide Mittel in einer Menge von etwa 0,05 bis 5 % der Mischung vorliegt und eine germizide Phenolverbindung oder ein quaternäres Ammoniumsalz ist.

19. Mischung nach Anspruch 18, worin das quaternäre Ammoniumsalz ein $(C_{10}-C_{20}-n-Alkyl)-(dimethyl)-benzyl-ammoniumsalz ist.

20. Mischung nach Anspruch 18, worin die Phenolverbindung 2-Benzyl-4-chlorphenol ist.

21. Mischung nach irgendeinem der Ansprüche 13 bis 20, worin das germizide Mittel etwa 0,25 bis 20 Gew.-% des germiziden Mittels ausmacht.

22. Mischung nach irgendeinem der Ansprüche 13 bis 21, worin das Lösungsmittel ein Gemisch aus Wasser und einem Alkohol ist.

23. Mischung nach irgendeinem der Ansprüche 13 bis 21, worin das Lösungsmittel ein niederes Alkanol ist und in einer Menge von etwa 85 % der Mischung vorliegt.

24. Mischung nach irgendeinem der Ansprüche 13 bis 23, worin zumindest etwa 85 Gew.-% der Mischung von einem Gemisch aus einem Alkohol und Wasser gebildet ist.

25. Verfahren zum Desinfizieren einer harten porösen oder nicht-porösen Oberfläche und zum Erteilen von lang dauernden germiziden Eigenschaften an diese Oberfläche, bei welchem Verfahren diese Fläche mit der Mischung gemäß irgendeinem der Ansprüche 1 bis 24 beschichtet wird und aus der Beschichtung das Lösungsmittel entfernt wird, um auf der Oberfläche einen germiziden, wasserbeständigen Polymerfilm auszubilden.

26. Verfahren nach Anspruch 25, worin je Quadratzoll der Oberfläche etwa 10 bis 100 mg der Mischung aufgebracht werden.

**Patentansprüche für folgenden Verstragsstaat: AT**

1. Verfahren zum Herstellen einer flüssigen Mischung, welche befähigt ist einen im wesentlichen von komplexierten anorganischen Metallsalzen freien antimikrobiellen Film zu bilden, bei welchem eine geringe Menge eines filmbildenden und wasserunlöslichen Copolymers in einer größeren Menge eines flüchtigen Lösungsmittels und ein germizides Mittel in einer dem Film lang anhaltende antimikrobielle Eigenschaften erteilenden Menge enthaltende Lösung hergestellt wird, wobei das Copolymer (a) in einer Menge von etwa 20 bis 99,5 mol-% des Copolymers an einem hydrophile funktionelle Gruppen aufweisenden Monomer und (b) etwa 0,5 bis 80 mol-% des Copolymers an einem aus aromatischen Estern, Cycloalkylestern, Tetrahydrofurfurylestern und Mischungen hievon ausgewählten Ester einer $\alpha,\beta$-ungesättigten Carbonsäure aufweist

2. Verfahren nach Anspruch 1, worin die Komponente (b) etwa 1 bis 90 mol-% eines Alkyl- oder (Alkoxy)-alkylesters einer $\alpha,\beta$-ungesättigten Säure ausmacht.

3. Verfahren nach Anspruch 2, worin der Alkylester ein $C_5-C_{22}$-Alkylester und der (Alkoxy)alkylester ein $(C_1-C_4)Alkoxy-(C_1-C_4)alkylester ist.

EP 0 194 770 B1

4. Verfahren nach irgendeinem der Ansprüche 1 bis 3, worin das Copolymer etwa 50 bis 95 mol-% des Monomers der Komponente (a) enthält.

5. Verfahren nach Anspruch 4, worin das Monomer der Komponente (a) einen Hydroxyalkylester einer $\alpha,\beta$-ungesättigten Carbonsäure enthält.

6. Verfahren nach Anspruch 5, worin der Hydroxyalkylester ein Hydroxyalkylacrylat oder ein Hydroxyalkylmethacrylat enthält.

7. Verfahren nach irgendeinem der Ansprüche 1 bis 6, worin die $\alpha,\beta$-ungesättigte Carbonsäure Acrylsäure, Methacrylsäure oder Itaconsäure umfaßt.

8. Verfahren nach irgendeinem der Ansprüche 1 bis 7, worin das Copolymer etwa 0,25 bis 10 % der Mischung ausmacht.

9. Verfahren nach irgendeinem der Ansprüche 1 bis 8, worin das germizide Mittel eine Phenolverbindung oder ein quaternäres Ammoniumsalz enthält.

10. Verfahren nach Anspruch 9, worin die Mischung etwa 0,01 bis 10 % an germizidem Mittel enthält.

11. Verfahren nach irgendeinem der Ansprüche 1 bis 10, worin das germizide Mittel etwa 0,01 bis 50 Gew.-% des gelösten Copolymers ausmacht.

12. Verfahren nach irgendeinem der Ansprüche 1 bis 11, worin das Lösungsmittel ein $C_1$-$C_4$-Alkanol oder ein Gemisch aus Wasser und einem $C_1$-$C_4$-Alkanol enthält.

13. Verfahren zum Herstellen einer flüssigen desinfizierenden Mischung, welche befähigt ist einen im wesentlichen von komplexierten anorganischen Metallsalzen freien antimikrobiellen Film zu bilden, bei welchem eine Mischung hergestellt wird, die im wesentlichen aus einer Lösung, in einer größeren Menge eines flüchtigen Lösungsmittels, einer kleineren Menge eines filmbildenden Copolymers aus (a) etwa 50 bis 95 mol-% eines aus 2-Hydroxyäthyl-methacrylat,2-Hydroxypropyl-methacrylat,3-Hydroxypropyl-methacrylat und Diacetonacrylamid ausgewählten hydrophilen Monomers und (b) etwa 1 bis 10 mol-% des erwähnten Copolymers eines aromatischen Esters oder Cycloalkylesters oder Tetrahydrofurfurylesters einer $\alpha,\beta$-ungesättigten Säure und (c) etwa 1 bis 10 mol-% des Copolymers eines $C_5$-$C_{20}$-Alkylesters oder eines (Alkoxy) alkylesters einer $\alpha,\beta$-ungesättigten Säure und einer dem Film lang anhaltende antimikrobielle Eigenschaften erteilenden Menge an einem germiziden Mittel besteht.

14. Verfahren nach Anspruch 13, worin das filmbildende Copolymer in einer Menge von etwa 0,5 bis 5 % der Mischung vorliegt.

15. Verfahren nach Anspruch 13 oder 14, worin die ungesättigte Säure Methacrylsäure, Acrylsäure oder Itaconsäure ist.

16. Verfahren nach Anspruch 15, worin der aromatische Ester ein Phenyl-, Benzyl-, oder Tetrahydrofurfurylester ist.

17. Verfahren nach irgendeinem der Ansprüche 13 bis 16, worin der Cycloalkylester ein Cyclohexyl-, Isobornyl- oder Adamantylester ist.

18. Verfahren nach irgendeinem der Ansprüche 13 bis 17, worin das germizide Mittel in einer Menge von etwa 0,05 bis 5 % der Mischung vorliegt und eine germizide Phenolverbindung oder ein quaternäres Ammoniumsalz ist.

19. Verfahren nach Anspruch 18, worin das quaternäre Ammoniumsalz ein ($C_{10}$-$C_{20}$-n-Alkyl)-(dimethyl)-benzyl-ammoniumsalz ist.

20. Verfahren nach Anspruch 18, worin die Phenolverbindung 2-Benzyl-4-chlorphenol ist.

24

21. Verfahren nach irgendeinem der Ansprüche 13 bis 20, worin das germizide Mittel etwa 0,25 bis 20 Gew.-% des germiziden Mittels ausmacht.

22. Verfahren nach irgendeinem der Ansprüche 13 bis 21, worin das Lösungsmittel ein Gemisch aus Wasser und einem Alkohol ist.

23. Verfahren nach irgendeinem der Ansprüche 13 bis 21, worin das Lösungsmittel ein niederes Alkanol ist und in einer Menge von etwa 85 % der Mischung vorliegt.

24. Verfahren nach irgendeinem der Ansprüche 13 bis 23, worin zumindest etwa 85 Gew.-% der Mischung von einem Gemisch aus einem Alkohol und Wasser gebildet ist.

25. Verfahren zum Desinfizieren einer harten porösen oder nicht-porösen Oberfläche und zum Erteilen von lang dauernden germiziden Eigenschaften an diese Oberfläche, bei welchem Verfahren diese Fläche mit einer nach einem Verfahren gemäß irgendeinem der Ansprüche 1 bis 24 hergestellten Mischung beschichtet wird und aus der Beschichtung das Lösungsmittel entfernt wird, um auf der Oberfläche einen germiziden, wasserbeständigen Polymerfilm auszubilden.

26. Verfahren nach Anspruch 25, worin je Quadratzoll der Oberfläche etwa 10 bis 100 mg der Mischung aufgebracht werden.